# EUROPÄISCHE PATENTANMELDUNG

(11) **EP 2 239 290 A1**
(43) Veröffentlichungstag der Anmeldung: **13.10.2010**
(21) Anmeldenummer: 09005186.3
(22) Anmeldetag: 09.04.2009
(51) Int. Cl.: C08G 59/50, C08G 63/18

(54) **Hydroxygruppen umfassende Kohlenstoffnanoröhren, Verfahren zu deren Herstellung und diese Kohlenstoffnanoröhren umfassende Polyurethanpolymere**

(71) Anmelder: Bayer MaterialScience AG, 51368 Leverkusen (DE)
(72) Erfinder: Vogel, Stephanie, 40764 Langenfeld (DE); Nefzger, Hartmut, Dr., 50259 Pulheim (DE); Hofmann, Jörg, Dr., 47829 Krefeld (DE)

(57) **Zusammenfassung**

Die Erfindung betrifft Hydroxygruppen umfassende Kohlenstoffnanoröhre, wobei ihre Oberfläche kovalent hieran gebundene Hydroxyalkylestergruppen umfasst, die ausgewählt sind aus der Gruppe gemäß der allgemeinen Formel (1) und/oder der allgemeinen Formel (2), wobei (CNT) für die Oberfläche der Kohlenstoffnanoröhre steht und R1 und R2 unabhängig voneinander Wasserstoff, ein Alkylrest oder ein Arylrest sind:

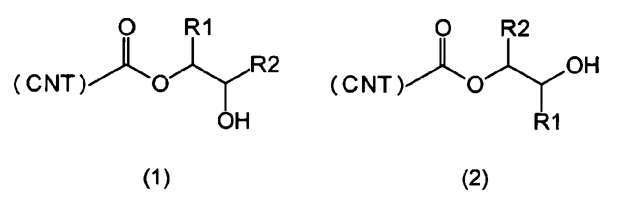

Sie betrifft weiterhin ein Verfahren zu deren Herstellung mittels Reaktion von Carbonsäuregruppen der Kohlenstoffnanoröhren mit einem Epoxid, weiterhin ein Polyurethanpolymer, in welchem diese Kohlenstoffnanoröhren kovalent angebunden sind, ein Verfahren zur Herstellung eines solchen Polymers und die Verwendung der Kohlenstoffnanoröhren zur Herstellung von Polymeren.

## Beschreibung

Die vorliegende Erfindung betrifft Hydroxygruppen umfassende Kohlenstoffnanoröhren, wobei ihre Oberfläche kovalent hieran gebundene Hydroxyalkylestergruppen umfasst. Sie betrifft weiterhin ein Verfahren zur Herstellung von solchen Hydroxygruppen umfassenden Kohlenstoffnanoröhren, ein Verfahren zur Herstellung von Kohlenstoffnanoröhren umfassenden Polyurethanpolymeren sowie ein Kohlenstoffnanoröhren umfassendes Polyurethanpolymer, wobei zumindest ein Teil der Kohlenstoffnanoröhren kovalent an das Polyurethanpolymer gebunden ist.

Kohlenstoffnanoröhren (carbon nanotubes, CNTs) sind für ihre außergewöhnlichen Eigenschaften bekannt. So beträgt beispielsweise deren Festigkeit das ungefähr 100-fache des Stahls, deren thermische Leitfähigkeit ist etwa doppelt so groß wie die von Diamant, ihre thermische Stabilität reicht bis hoch zu 2800 °C im Vakuum und deren elektrische Leitfähigkeit kann ein Vielfaches der Leitfähigkeit von Kupfer betragen. Diese strukturbedingten Charakteristika sind auf molekularer Ebene allerdings nur dann zugänglich, wenn es gelingt, Kohlenstoffnanoröhren homogen zu verteilen und einen möglichst großen Kontakt zwischen den Röhren und dem Medium herzustellen, also diese mit dem Medium verträglich und somit stabil dispergierbar zu machen.

Eine chemische Funktionalisierung von Kohlenstoffnanoröhren oder Kohlenstoff-Fasern kann unter anderem deren Dispergierbarkeit verbessern. In einem Übersichtsartikel von N. Tsubokawa (Polymer Journal 2005, 37, 637-655) wird eine Vielzahl von Möglichkeiten zu einer solchen Funktionalisierung aufgeführt. Neben aufwendigen chemischen Reaktionen wie beispielsweise Ligandenaustauschreaktionen an 1,1'-Dicarboxyferrocen, der lebenden radikalischen Polymerisation mit Polystyrol und der Umsetzung mit Aziden wurde auch die auf diesem Gebiet bekannte Oxidation der Kohlenstoffnanoröhren mit HNO₃ und entsprechende darauf aufbauende Modifikationen genannt. Tsubokawa berichtet von drei Möglichkeiten der Folgechemie nach der oxidativen Einführung von Carboxylgruppen.

Die erste Variante hierzu ist die Aktivierung der Säuregruppen durch Thionylchlorid, gefolgt von einer weiteren Umsetzung mit einem Nucleophil. Nachteilig hieran ist das durch die Verwendung von Thionylchlorid freiwerdende SO₂ und HCl. Die zweite Variante ist die Umsetzung der Carboxylgruppen der Kohlenstoffnanoröhren mit Kopplungsreagenzien wie dem aus der Peptidchemie bekannten DCC mit anschließender Reaktion mit einem Nucleophil. Diese Methode erfordert jedoch den Einsatz eines teuren Kopplungsreagenzes und produziert, je nach verwendetem Kopplungsreagenz, einen schwer löslichen Harnstoff als Nebenprodukt.

Eine dritte Variante schließlich wird in diesem Übersichtsartikel anhand von aus der Gasphase erhaltenen Kohlenstoff-Fasern (vapor grown carbon fibers, VGCF) beschrieben. Hierbei findet eine anionische Polymerisation von Epoxiden und Säureanhydriden durch alterniernde Ringöffnung statt. Dieses wurde vom gleichen Autor bereits separat in Polymer Journal 2004, 36, 316-322 beschrieben. Initiiert wird die Synthesesequenz durch die Deprotonierung der Carboxylgruppe durch KOH. Dadurch muss die Polymerisation in Gegenwart von Kronethern durchgeführt werden, was diese Chemie sehr teuer macht und Abfallprobleme mit sich bringt. In dem konkreten Beispiel wird die Carboxylatgruppe der Kohlenstoff-Faser mit Styroloxid und Phthalsäureanhydrid umgesetzt. Aus einer Tabelle lässt sich entnehmen, dass die Reaktion der Carboxylatgruppe mit Styroloxid alleine zu keiner Umsetzung führt.

Die Funktionalisierung von Carboxylgruppen bei der Polyester-Polyolsynthese wird in DE 36 13 875 A1 offenbart. Zur Herstellung von Polyester-Polyolen mit einer Säurezahl von kleiner als 1, einer Hydroxylzahl von ungefähr 20 bis ungefähr 400 und einer Funktionalität von zweckmäßigerweise 2 bis 3 Polycarbonsäuren und/oder deren Anhydride und mehrwertige Alkohole kondensiert werden. Dieses geschieht vorteilhafterweise in Abwesenheit von üblichen Veresterungskatalysatoren bei Temperaturen von 150 °C bis 250 °C und gegebenenfalls unter vermindertem Druck. Es wird bis zu einer Säurezahl von 20 bis 5 polykondensiert und die erhaltenen Polykondensate danach pro Carboxylgruppe mit 1 bis 5 Mol Alkylenoxid, zum Beispiel 1,2-Propylenoxid und/oder vorzugsweise Ethylenoxid, in Gegenwart eines tertiären Amins alkoxiliert. Das tertiäre Amin ist ausgewählt aus der Gruppe N-Methylimidazol, Diazabicyclo-[2,2,2]octan, Diazabicyclo[5,4,0]undec-7-en und Pentamethylen-diethylen-triamin. Der Katalysator wird zweckmäßigerweise in einer Menge von 0,001 bis 1,0 Gewichts-%, bezogen auf das Polykondensatgewicht, eingesetzt. Vorteilhafterweise wird bei Temperaturen von 100 °C bis 170 °C und unter einem Druck von 1 bis 10 bar alkoxiliert.

Bislang noch nicht beschrieben wurden funktionalisierte Kohlenstoffnanoröhren, bei denen aufbauend auf an der Oberfläche befindlichen Carboxylgruppen Hydroxyalkylestergruppen mit einem Abstand von 2 Kohlenstoffatomen zwischen der Esterfunktion und der freien OH-Gruppe vorliegen. Solche Hydroxylgruppen tragenden Kohlenstoffnanoröhren wären für Funktionalisierungen nützlich, bei denen aufgrund der speziellen chemischen Gegebenheiten eine Anbindung über eine OH-Gruppe erforderlich ist.

Erfindungsgemäß vorgeschlagen wird daher eine Hydroxygruppen umfassende Kohlenstoffnanoröhre, wobei ihre Oberfläche kovalent hieran gebundene Hydroxyalkylestergruppen umfasst, die ausgewählt sind aus der Gruppe gemäß der allgemeinen Formel (1) und/oder der allgemeinen Formel (2), wobei (CNT) für die Oberfläche der Kohlenstoffnanoröhre steht und R1 und R2 unabhängig voneinander Wasserstoff, ein Alkylrest oder ein Arylrest sind:

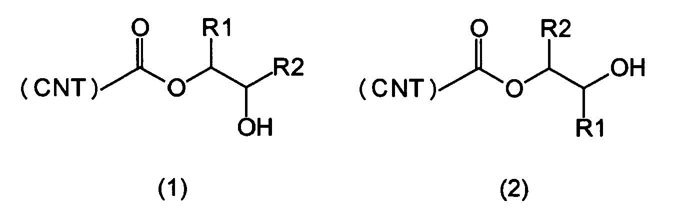

Die Strukturen gemäß der isomeren allgemeinen Formeln (1) und (2) lassen sich aus der Reaktion von an der Oberfläche der Kohlenstoffnanoröhren befindlichen Carboxyl- oder Carboxylatgruppen mit die Reste R1 und R2 tragenden Epoxiden herleiten. Hierbei wird unter Öffnung des Epoxidrings ein Carbonsäureester mit einer OH-Gruppe im Abstand von 2 Kohlenstoffatomen zu der Estergruppe erhalten. Je nachdem, wie sich der Epoxidring öffnet, findet die Anbindung der Estergruppe an das R1 tragende Kohlenstoffatom gemäß Formel (1) oder an das R2 tragende Kohlenstoffatom gemäß Formel (2) statt. Wenn einer der Reste R1 oder R2 Wasserstoff ist und der andere der beiden Reste nicht, so können primäre beziehungsweise sekundäre Alkohole erhalten werden.

Der Begriff "Alkyl" umfasst allgemein im Zusammenhang der gesamten Erfindung Substituenten aus der Gruppe n-Alkyl, verzweigtes Alkyl und/oder Cycloalkyl. Der Begriff "Aryl" umfasst allgemein im Zusammenhang der gesamten Erfindung Substituenten aus der Gruppe einkernige Carbo- oder Heteroarylsubstituenten und/oder mehrkernige Carbo- oder Heteroarylsubstituenten.

Die erhaltene freie OH-Gruppe kann dann für Folgereaktionen genutzt werden, um die Oberfläche der Kohlenstoffnanoröhre weiter zu funktionalisieren. Der Gehalt an diesen freien OH-Gruppen, ausgedrückt in mmol OH-Gruppen pro Gramm Kohlenstoffnanoröhren, kann beispielsweise ≥ 0,1 mmol/g bis ≥ 5 mmol/g, vorzugsweise ≥ 0,5 mmol/g bis ≥ 1 mmol/g, betragen.

In einer Ausführungsform der erfindungsgemäßen Hydroxygruppen umfassenden Kohlenstoffnanoröhre stehen R1 und R2 unabhängig voneinander für Wasserstoff, Methyl, Ethyl, n-Propyl, iso-Propyl, n-Butyl, sec-Butyl, iso-Butyl, tert-Butyl und/oder Phenyl oder gemeinsam für -(CH₂)₄-. Wenn R1 und R2 gemeinsam für -(CH₂)₄- stehen, würde sich die Struktur solcher erfindungsgemäßer Kohlenstoffnanoröhren aus der Reaktion von an der Oberfläche der Kohlenstoffnanoröhren befindlichen Carboxyl- oder Carboxylatgruppen mit Cyclohexenoxid herleiten. Bevorzugt ist jedoch, dass R1 und R2 für Wasserstoff stehen oder aber dass R1 für Wasserstoff und R2 für Methyl steht. Dann kann die Struktur solcher erfindungsgemäßer Kohlenstoffnanoröhren auf die Reaktion von an der Oberfläche der Kohlenstoffnanoröhren befindlichen Carboxyl- oder Carboxylatgruppen mit Ethylenoxid oder Propylenoxid zurückgeführt werden.

In einer weiteren Ausführungsform der erfindungsgemäßen Hydroxygruppen umfassenden Kohlenstoffnanoröhre ist die Kohlenstoffnanoröhre ausgewählt aus der Gruppe umfassend einwandige Kohlenstoffnanoröhren, mehrwandige Kohlenstoffnanoröhren, mehrwandige Kohlenstoffnanoröhren vom Zylinder-Typ, vom Scroll-Typ, vom Multiscroll-Typ und/oder mit zwiebelartiger Struktur. Günstig ist es, wenn die Kohlenstoffnanoröhren ein Verhältnis von Länge zu Außendurchmesser von ≥ 5, bevorzugt ≥ 100 haben.

Im Unterschied zu den bereits erwähnten bekannten Kohlenstoffnanoröhren vom Scroll-Typ mit nur einer durchgehenden oder unterbrochenen Graphenlage existieren auch Kohlenstoffnanoröhren-Strukturen, die aus mehreren Graphenlagen bestehen, welche zu einem Stapel zusammengefasst und aufgerollt vorliegen. Man spricht hierbei vom Multiscroll-Typ. Diese Kohlenstoffnanoröhren werden in DE 10 2007 044031 A1 beschrieben, auf die in vollem Umfang Bezug genommen wird. Diese Struktur verhält sich zu den Kohlenstoffnanoröhren vom einfachen Scroll-Typ vergleichsweise wie die Struktur mehrwandiger zylindrischer Kohlenstoffnanoröhren (cylindrical MWNT) zur Struktur der einwandigen zylindrischen Kohlenstoffnanoröhren (cylindrical SWNT).

Es ist günstig, wenn die erfindungsgemäßen Hydroxygruppen umfassenden Kohlenstoffnanoröhre einen Durchmesser von ≥ 3 nm bis ≤ 100 nm aufweist. Der Durchmesser bezieht sich hierbei auf den mittleren Durchmesser der Kohlenstoffnanoröhren. Er kann auch in einem Bereich von ≥ 5 nm bis ≤ 80 nm und vorteilhafterweise von ≥ 6 nm bis ≤ 60 nm liegen. Die Länge der Kohlenstoffnanoröhren ist zunächst nicht begrenzt. Sie kann aber beispielsweise in einem Bereich von ≥ 1 µm bis ≤ 100 µm und vorteilhafterweise von ≥ 10 µm bis ≤ 30 µm liegen.

Ein weiterer Gegenstand der vorliegenden Erfindung ist ein Verfahren zur Herstellung von erfindungsgemäßen Hydroxygruppen umfassenden Kohlenstoffnanoröhren, umfassend die Schritte:
(a) Bereitstellen von Kohlenstoffnanoröhren, deren Oberfläche kovalent hieran gebundene Carboxylgruppen umfasst; und
(b) Reaktion der Kohlenstoffnanoröhren aus Schritt (a) mit einem Epoxid 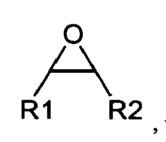 wobei R1 und R2 unabhängig voneinander Wasserstoff, ein Alkylrest oder ein Arylrest sind.

Diese Syntheseroute ist im Vergleich zur Veresterung über Carbonsäurechloride an der Oberfläche der Kohlenstoffnanoröhren um mindestens einen Schritt kürzer. Von besonderem Vorteil ist auch, dass diese Synthese unter vergleichsweise milden Reaktionsbedingungen durchgeführt werden kann. In der Regel sind für eine direkte Veresterung von Carboxylgruppen an der Oberfläche einer Kohlenstoffnanoröhre deutlich höhere Temperaturen nötig, wodurch eine Reagglomeration der Nanoröhren stattfinden kann oder aber die Vereinzelung der Nanoröhren aufgrund der chemischen Funktionalisierung ausbleibt. Größere Nanoröhren-Agglomerate mit Durchmessern im Bereich von 100 µm bis 200 µm müssen dann noch in einem aufwendigen Filtrierverfahren abgetrennt werden. Ansonsten würde nach einer weiteren Verarbeitung, zum Beispiel in einem Polymerformteil, Sollbruchstellen erzeugt werden. Gegenüber der Säurechloridroute besteht ein weiterer Vorteil darin, dass es sich bei dem erfindungsgemäßen Verfahren um eine Additionsreaktion handelt, die nur mit geringen Mengen eines Katalysators auskommen muss. Bei der Veresterung über ein Säurechlorid würden hingegen stöchiometrische Mengen Chlorwasserstoff freigesetzt werden, die letztendlich entfernt werden müssten.

Die erfindungsgemäße, Hydroxygruppe umfassende Kohlenstoffnanoröhre lässt sich so beschreiben, dass es aus diesem erfindungsgemäßen Verfahren erhältlich ist.

Die als Ausgangsmaterial eingesetzten, an der Oberfläche kovalent gebundene Carboxylgruppen umfassenden Kohlenstoffnanoröhren können aus unfunktionalisierten Kohlenstoffnanoröhren mittels oxidativer Verfahren wie dem HNO₃-Verfahren erhalten werden. Der Gehalt an Carboxylgruppen an der Oberfläche lässt sich durch konduktometrische Titration bestimmen und in mmol Carboxylgruppen pro Gramm Kohlenstoffnanoröhren angeben. Der Gehalt kann beispielsweise ≥ 0,1 mmol/g bis ≥ 5 mmol/g, vorzugsweise ≥ 0,5 mmol/g bis ≥ 1 mmol/g, betragen.

Die Bereitstellung von Kohlenstoffnanoröhren in Schritt (a) erfolgt vorteilhafterweise als Dispersion in einem Lösungsmittel. Dieses Lösungsmittel sollte danach ausgewählt sein, dass es mit dem eingesetzten Epoxid keine unerwünschten Nebenreaktionen eingeht. Geeignete Lösungsmittel sind unter anderem aromatische Kohlenwasserstoffe wie Toluol oder Xylol, Cycloalkane wie Cyclohexan, Alkane wie Hexan sowie Ether, insbesondere cyclische Ether wie Tetrahydrofuran oder Dioxan. Die Konzentration der Kohlenstoffnanoröhren in einer Dispersion kann beispielsweise in einem Bereich von ≥ 0,1 Gewichts% bis ≥ 10 Gewichts-%, bevorzugt von ≥1 Gewichts-% bis ≥ 5 Gewichts-%, liegen. Die Dispersion kann durch Verwendung eines Rührers mit einem Rotor/Stator-System bei hohen Drehzahlen wie zum Beispiel zwischen ≥ 20000 U/min und ≥ 25000 U/min erhalten werden. Zusätzlich kann hierbei Ultraschall auf die Dispersion einwirken.

Um die Reaktion in Schritt (b) in die gewünschte Richtung zu treiben, kann der Epoxid in einem großen Überschuss gegenüber den Carboxylgruppen auf der Oberfläche der Kohlenstoffnanoröhren eingesetzt werden. Wenn das Epoxid unter den Reaktionsbedingungen gasförmig ist, kann der Reaktionsdruck (absolut) beispielsweise von ≥ 2 bar bis ≤ 5 bar liegen.

In einer Ausführungsform dieses Verfahrens wird die Reaktion der Kohlenstoffnanoröhren in Schritt (b) in Gegenwart eines tertiären Amins als Katalysators durchgeführt. Bevorzugt sind hierbei tertiäre Diamine. Beispiele hierfür sind Diazabicycloalkane wie 1,4-Diazabicyclo[2.2.2]octan, Diazabicycloalkene wie 1,8-Diazabicyclo[5.4.0]undec-7-en, Triamine wie Pentamethylen-diethylen-triamin sowie Bis(2-dialkylaminoalkyl)ether wie Bis(2-dimethylaminoethyl)ether. Insbesondere der Katalysator Bis(2-dimethylaminoethyl)ether führt dazu, dass nur ein Molekül des Epoxids mit der Carboxylgruppe reagiert, so dass es also nicht zur Bildung von Polyetherketten kommt.

In einer weiteren Ausführungsform dieses Verfahrens stehen in dem Epoxid in Schritt (b) R1 und R2 unabhängig voneinander für Wasserstoff, Methyl, Ethyl, n-Propyl, iso-Propyl, n-Butyl, sec-Butyl, iso-Butyl, tert-Butyl und/oder Phenyl oder gemeinsam für -(CH₂)₄-. Vorzugsweise ist dabei das Epoxid in Schritt (b) ein terminales Alkylenoxid. Dann ist mindestens einer der Reste R1 oder R2 Wasserstoff. Beispiele für solche Alkylenoxide sind Ethylenoxid, Propylenoxid sowie n-Butylenoxid. Bevorzugt sind hierbei Ethylenoxid und Propylenoxid.

In einer weiteren Ausführungsform dieses Verfahrens sind die Kohlenstoffnanoröhren in Schritt (a) ausgewählt aus der Gruppe umfassend einwandige Kohlenstoffnanoröhren, mehrwandige Kohlenstoffnanoröhren, mehrwandige Kohlenstoffnanoröhren vom Zylinder-Typ, vom Scroll-Typ, vom Multiscroll-Typ und/oder mit zwiebelartiger Struktur. Vorteilhafterweise weisen die Kohlenstoffnanoröhren in Schritt (a) einen Durchmesser von ≥ 3 nm bis ≤ 100 nm auf. Weitere Details und bevorzugte Längen und Durchmesser wurden bereits im Zusammenhang mit den erfindungsgemäßen Kohlenstoffnanoröhren weiter oben beschrieben. Daher wird zur Vermeidung von Wiederholungen auf das Vorstehende Bezug genommen.

In einer weiteren Ausführungsform dieses Verfahrens wird die Reaktion in Schritt (b) bei einer Temperatur von ≥ 100 °C bis ≤ 150 °C durchgeführt. Vorteilhafterweise liegt die Reaktionstemperatur hierbei zwischen ≥ 120 °C bis ≤ 130 °C. Solche vergleichsweise niedrigen Reaktionstemperaturen ermöglichen die Funktionalisierung der Kohlenstoffnanoröhren, ohne dass ihre Reagglomeration in den Vordergrund tritt. Aus prozesstechnischer Sicht ist mit solchen Temperaturen, welche unterhalb der in der Regel für eine direkte Veresterung der Carboxylgruppen mit Alkoholen benötigten Temperatur liegt, weiterhin eine Energieeinsparung verbunden.

Die erfindungsgemäßen Hydroxygruppen umfassenden Kohlenstoffnanoröhren können vorteilhafterweise bei der Synthese von Polyurethanpolymeren mit eingesetzt werden und so kovalent in die Polymermatrix eingebaut werden. Daher ist ein weiterer Gegenstand der vorliegenden Erfindung ein Verfahren zur Herstellung von Kohlenstoffnanoröhren umfassenden Polyurethanpolymeren, umfassend die Schritte:
(a) Bereitstellen einer Dispersion von Kohlenstoffnanoröhren, deren Oberfläche kovalent hieran gebundene Carboxylgruppen umfasst, in einem Polyol;
(b) Reaktion der Dispersion aus Schritt (a) mit einem Epoxid 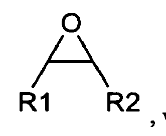 wobei R1 und R2 unabhängig voneinander Wasserstoff, ein Alkylrest oder ein Arylrest sind; und
(c) Reaktion der in Schritt (b) erhaltenen Dispersion mit einem Polyisocyanat.

Ohne auf eine Theorie festgelegt zu sein, wird angenommen, dass die nach Schritt (b) erhaltenen, erfindungsgemäßen Kohlenstoffnanoröhren während der Bildung des Polyurethanpolymers mit ihren freien Hydroxylgruppen zumindest teilweise ebenfalls mit Isocyanatgruppen reagieren. Hierbei wird im Ergebnis eine Polyurethanpolymer-Kette kovalent an die Oberfläche der Kohlenstoffnanoröhre angebunden.

Die als Ausgangsmaterial eingesetzten, an der Oberfläche kovalent gebundene Carboxylgruppen umfassenden Kohlenstoffnanoröhren können aus unfunktionalisierten Kohlenstoffnanoröhren mittels oxidativer Verfahren wie dem HNO₃-Verfahren erhalten werden. Der Gehalt an Carboxylgruppen an der Oberfläche lässt sich durch konduktometrische Titration bestimmen und in mmol Carboxylgruppen pro Gramm Kohlenstoffnanoröhren angeben. Der Gehalt kann beispielsweise ≥ 0,1 mmol/g bis ≥ 5 mmol/g, vorzugsweise ≥ 0,5 mmol/g bis ≥ 1 mmol/g, betragen.

Die Kohlenstoffnanoröhren in Schritt (a) können ausgewählt sein der Gruppe umfassend einwandige Kohlenstoffnanoröhren, mehrwandige Kohlenstoffnanoröhren, mehrwandige Kohlenstoffnanoröhren vom Zylinder-Typ, vom Scroll-Typ, vom Multiscroll-Typ und/oder mit zwiebelartiger Struktur. Vorteilhafterweise weisen die Kohlenstoffnanoröhren in Schritt (a) einen Durchmesser von ≥ 3 nm bis ≤ 100 nm auf. Weitere Details und bevorzugte Längen und Durchmesser wurden bereits im Zusammenhang mit den erfindungsgemäßen Kohlenstoffnanoröhren weiter oben beschrieben. Daher wird zur Vermeidung von Wiederholungen auf das Vorstehende Bezug genommen.

Die Bereitstellung von Kohlenstoffnanoröhren in Schritt (a) erfolgt als Dispersion in einem Polyol. Die Konzentration der Kohlenstoffnanoröhren in der Dispersion kann beispielsweise in einem Bereich von ≥ 0,1 Gewichts-% bis ≥ 10 Gewichts-%, bevorzugt von ≥ 1 Gewichts-% bis ≥ Gewichts-%, liegen. Die Dispersion kann durch Verwendung eines Rührers mit einem Rotor/Stator-System bei hohen Drehzahlen wie zum Beispiel zwischen ≥ 20000 U/min und ≥ 25000 U/min erhalten werden. Zusätzlich kann hierbei Ultraschall auf die Dispersion einwirken.

Geeignete Polyole sind grundsätzlich die in der Polyurethanchemie üblichen Polyole wie beispielsweise Polyether-, Polyacrylat-, Polycarbonat-, Polycaprolacton-, Polyurethan- und Polyester-Polyole. Solche Polyole werden in "Ullmanns Enzyklopädie der technischen Chemie", 4. Auflage, Band 19, S. 304-305, Verlag Chemie, Weinheim, oder in "Polyurethane - Lacke, Kleb- und Dichtstoffe" von Ulrich Meier-Westhues, Vincentz Network, Hannover, 2007, beschrieben.

Um die Reaktion in Schritt (b) in die gewünschte Richtung zu treiben, kann der Epoxid in einem großen Überschuss gegenüber den Carboxylgruppen auf der Oberfläche der Kohlenstoffnanoröhren eingesetzt werden. Wenn das Epoxid unter den Reaktionsbedingungen gasförmig ist, kann der Reaktionsdruck (absolut) beispielsweise bei ≥ 2 bar bis ≤ 10 bar liegen.

Geeignete Polyisocyanate sind aromatische, araliphatische, aliphatische oder cycloaliphatische Polyisocyanate mit einer NCO-Funktionalität von ≥ 2.

Beispiele solcher geeigneten Polyisocyanate sind 1,4-Butylendiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C₁- bis C₈-Alkylgruppen.

Neben den vorstehend genannten Polyisocyanaten können anteilig oder vollständig auch modifizierte Diisocyanate mit Uretdion-, Isocyanurat-, Urethan-, Allophanat-, Biuret-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan- 4,4',4"-triisocyanat eingesetzt werden.

Weiterhin ist es möglich, dass als Polyisocyanatkomponente NCO-terminierte Prepolymere aus den vorgenannten Polyisocyanaten und Polyolen eingesetzt werden.

Das molare Verhältnis von NCO-Gruppen des Polyisocyanats zu NCO-reaktiven OH-Gruppen kann beispielsweise ≥ ,90 bis ≤ 1,15, bevorzugt ≥ 1,0 bis ≤ 1,1 besonders bevorzugt ≥ 1,02 bis ≤ 1,07 betragen.

In einer Ausführungsform dieses Verfahrens wird die Reaktion der Dispersion mit einem Alkylenoxid in Schritt (b) in Gegenwart eines tertiären Amins als Katalysators durchgeführt. Bevorzugt sind hierbei tertiäre Diamine. Beispiele hierfür sind Diazabicycloalkane wie 1,4-Diazabicyclo[2.2.2]octan, Diazabicycloalkene wie 1,8-Diazabicyclo[5.4.0]undec-7-en, Triamine wie Pentamethylen-diethylen-triamin sowie Bis(2-dialkylaminoalkyl)ether wie Bis(2-dimethylaminoethyl)ether. Insbesondere der Katalysator Bis(2-dimethylaminoethyl)ether führt dazu, dass nur ein Molekül des Epoxids mit der Carboxylgruppe reagiert, so dass es also nicht zur Bildung von Polyetherketten kommt. Weiterhin wurde festgestellt, dass sich in Systemen mit dem Katalysator Bis(2-dimethylaminoethyl)ether gute Dispersionen erhalten werden.

In einer weiteren Ausführungsform dieses Verfahrens ist der Polyol in Schritt (a) ein Polyetherpolyol und/oder ein Polyesterpolyol. Bevorzugte Polyetherpolyole weisen Hydroxylzahlen von ≥ 25 mg KOH/g bis ≤ 550 mg KOH/g, vorteilhafterweise von ≥ 100 mg KOH/g bis ≤ 520 mg KOH/g auf. Günstig ist es, wenn die Polyetherpolyole ausschließlich oder überwiegend auf der Basis von Propylenoxid aufgebaut sind. Bevorzugte Polyesterpolyole weisen Hydroxylzahlen von ≥ 100 mg KOH/g bis ≤ 550 mg KOH/g, vorteilhafterweise von ≥ 200 mg KOH/g bis ≤ 500 mg KOH/g auf. Es ist möglich, dass die genannten Polyole Molmassen im Bereich von ≥ 250 bis ≤ 5000 g/mol, vorzugsweise ≥ 400 bis ≤ 3500 g/mol und eine Funktionalität zwischen ≥ 1,8 und ≤ 6, vorzugsweise zwischen ≥ 1,95 und ≤ 3,5 aufweisen.

In einer weiteren Ausführungsform dieses Verfahrens stehen in dem Epoxid in Schritt (b) R1 und R2 unabhängig voneinander für Wasserstoff, Methyl, Ethyl, n-Propyl, iso-Propyl, n-Butyl, sec-Butyl, iso-Butyl, tert-Butyl und/oder Phenyl stehen oder gemeinsam für -(CH₂)₄-. Vorzugsweise ist dabei das Epoxid in Schritt (b) ein terminales Alkylenoxid. Dann ist mindestens einer der Reste R1 oder R2 Wasserstoff. Beispiele für solche Alkylenoxide sind Ethylenoxid, Propylenoxid sowie n-Butylenoxid. Bevorzugt sind hierbei Ethylenoxid und Propylenoxid.

In einer weiteren Ausführungsform dieses Verfahrens ist das Polyisocyanat in Schritt (c) ein Polyisocyanat auf der Basis von Diphenyl-4,4'-diisocyanat (MDI). Dass das Polyisocyanat auf MDI basiert, bedeutet, dass es sich entweder um monomeres, um mehrkerniges oder um polymeres MDI handelt. Beispielsweise kann es einen NCO-Gehalt von ≥ 25 Gewichts-% bis ≤ 35 Gewichts-% aufweisen. Der NCO-Gehalt kann auch in einem Bereich von ≥ 29 Gewichts-% bis ≤ 31 Gewichts-% liegen.

Ein weiterer Gegenstand der vorliegenden Erfindung ist ein Kohlenstoffnanoröhren umfassendes Polyurethanpolymer, wobei zumindest ein Teil der Kohlenstoffnanoröhren kovalent an das Polyurethanpolymer gebunden ist. Das Polyurethanpolymer zeichnet sich dadurch aus, dass zwischen den Kohlenstoffnanoröhren und dem Polyurethanpolymer Urethanbindungen aus kovalent an die Oberfläche der Kohlenstoffnanoröhren gebundenen Hydroxyalkylestergruppen und freien Isocyanatgruppen des Polyurethanpolymers vorliegen, wobei die Urethanbindungen ausgewählt sind aus der Gruppe gemäß den allgemeinen Formeln (3) und/oder (4): 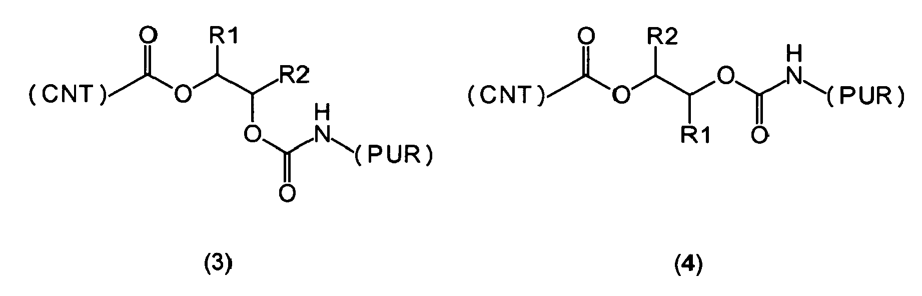 und wobei (CNT) für die Oberfläche der Kohlenstoffnanoröhre steht, (PUR) für ein Polyurethanpolymer steht und R1 und R2 unabhängig voneinander Wasserstoff, ein Alkylrest oder ein Arylrest sind.

Die Strukturen der allgemeinen Formeln (3) und (4) lassen sich herleiten, indem ausgehend von erfindungsgemäßen, Hydroxygruppen umfassenden Kohlenstoffnanoröhren gemäß der allgemeinen Formeln (1) und (2) die freie OH-Gruppe mit einer Isocyanatgruppe reagiert, wodurch eine Anbindung an das Polyurethanpolymer erreicht wird. Folglich lässt sich das erfindungsgemäße Polyurethanpolymer auch so beschreiben, dass es aus dem vorstehenden erfindungsgemäßen Verfahren erhältlich ist.

Im erfindungsgemäßen Polyurethanpolymer kann eine Versteifung gegenüber einem nicht mit Kohlenstoffnanoröhren versehenen Polyurethan und auch gegenüber einem mit nicht erfindungsgemäß funktionalisierten Kohlenstoffnanoröhren beobachtet werden. Ohne auf eine Theorie festgelegt zu sein, wird angenommen, dass durch die reaktive Anbindung des Polyurethans an die Oberfläche der Kohlenstoffnanoröhre eine gleichmäßigere Verteilung innerhalb der Polymermatrix stattfindet und gleichzeitig die feste Anbindung des Polyurethans die mechanischen Eigenschaften günstig beeinflusst.

Details zu den Kohlenstoffnanoröhren (CNT), den Resten R1 und R2 sowie zu den Reaktionskomponenten, aus denen das Polyurethanpolymer (PUR) erhalten wird, wurden bereits einschließlich bevorzugter Ausführungsformen vorstehend beschrieben. Zur Vermeidung von Wiederholungen wird hierauf im Zusammenhang mit dem erfindungsgemäßen Polyurethanpolymer in vollem Umfang Bezug genommen.

Der Anteil der Kohlenstoffnanoröhren im erfindungsgemäßen Polyurethanpolymer kann beispielsweise ≥ 0,1 Gewichts-% bis ≤ 5 Gewichts-%, vorzugsweise ≥ 0,5 Gewichts-% bis ≤ 1 Gewichts-% betragen. Ein solch geringer Anteil der Kohlenstoffnanoröhren kann bereits zu einer merklichen Verstärkung des Materials fuhren.

Das erfindungsgemäße Polyurethanpolymer kann beispielsweise ein Elastizitätsmodul von ≥ 1 N/mm² bis ≤ 10000 N/mm² aufweisen. In einer Ausführungsform ist dieses ein Elastomer mit einem Elastizitätsmodul von ≥ 10 N/mm² bis ≤ 5000 N/mm², vorzugsweise von ≥ 100 N/mm² bis ≤ 1000 N/mm². Das Elastizitätsmodul kann als Steigung im Arbeitspunkt der Spannungs-Dehnungskurve aus dem Zugversuch nach DIN 53 504 bei verschwindender Deformation zwischen 0,025 % und 0,05 % Dehnung bestimmt werden.

Ein weiterer Gegenstand der vorliegenden Erfindung ist die Verwendung von erfindungsgemäßen Hydroxygruppen umfassenden Kohlenstoffnanoröhren zur Herstellung von Kohlenstoffnanoröhren umfassenden Polymeren. Dieses kann beispielsweise ein Verfahren sein, bei dem die erfindungsgemäßen Kohlenstoffnanoröhren zu dem Polymer selbst oder zu der Reaktionsmischung hinzugefügt werden, aus der das Polymer erhalten wird. Solch eine Reaktionsmischung kann zu einem Polyurethan führen. Ein anderes Beispiel ist eine Reaktionsmischung, die zu einem Epoxidharz führt. Über die freien Hydroxygruppen können die erfindungsgemäßen Kohlenstoffnanoröhren in der Polymermatrix kovalent gebunden werden. Es ist aber ebenso möglich, dass die erfindungsgemäßen Kohlenstoffnanoröhren ohne kovalente Anbindung in der Polymermatrix vorliegen.

Die vorliegende Erfindung wird anhand der nachfolgenden Beispiele weiter erläutert. Hierbei haben die verwendeten Materialien und Abkürzungen die folgende Bedeutung:

| | |
|---|---|
| Desmophen® VP.PU 22HS51: | bifunktioneller Polyetherpolyol mit einer OH-Zahl von 112 mg KOH/g (Bayer MaterialScience) |
| Desmodur® CD-S: | modifiziertes Polyisocyanat auf Basis von Diphenyl-4,4'-diisocyanat, und einem NCO-Gehalt von 29,5% (Bayer MaterialScience) |
| DABCO 33-LV: | Aminkatalysator; 1,4-Diazabicyclo[2.2.2]octane; 33 %-Lösung in Propylenglykol (Air Products) |
| Niax A1: | Aminkatalysator; Bis(2-dimethylaminoethyl)ether; 70%-Lösung in Dipropylenglykol (GE Bayer Silicones GmbH) |
| DBTL: | Dibutylzinndilaurat |
| DPG: | Dipropylenglykol |
| Oxidierte CNTs: | Oxidierte Kohlenstoffnanoröhren vom Typ Baytubes® C150P (Bayer MaterialScience), bei denen nach bekannten Verfahren auf der Oberfläche Carboxylgruppen eingeführt wurden |

Die Bestimmung der mechanischen Eigenschaften der in den Beispielen erhaltenen Elastomeren erfolgte gemäß der folgenden Normen:

| | |
|---|---|
| Härte [Shore A]: | DIN 53 505 |
| Zugfestigkeit [MPa]: | DIN 53 504 |
| Maximale Dehnung [%]: | DIN 53 504 |
| Elastizitätsmodul [N/mm²]: | als Steigung im Arbeitspunkt der Spannungs-Dehnungskurve aus dem Zugversuch nach DIN 53 504 bei verschwindender Deformation zwischen 0,025 % und 0,05 % Dehnung |

### Allgemeine Anmerkungen zu den Beispielen:

Die dem HNO₃-Verfahren oxidierten Baytubes C150P (mehrwandige Kohlenstoffnanoröhren) besaßen eine Carboxylgruppen-Konzentration von 0,5 mmol/g (konduktometrische Titration). Diese oxidierten Kohlenstoffnanoröhren wurden in ein Trägerpolyetherpolyol in zwei verschiedenen Konzentrationen (1 Gewichts-% und 3 Gewichts-%) eingebracht. Hierzu wurden sie mit einem Rotor-/Stator-System (T 18 basic ULTRA-TURRAX®, IKA Werke GmbH & Co. KG, Staufen, Deutschland) grob vordispergiert, um eine erste Verteilung der Nanoröhren in dem Medium und eine Benetzung mit dem Medium zu erhalten. Ein einfaches Einrühren der Nanoröhren reichte für die Herstellung einer stabilen Dispersion, die für eine nachfolgende chemische Reaktion eingesetzt werden kann, nicht aus.

Diese Dispersion wurde in einem entsprechenden Reaktor mit einem aminischen Katalysator vorgelegt und mit Propylenoxid versetzt. Der Reaktionsverlauf wurde durch die Säurezahlbestimmung beobachtet. Nach erfolgter Umsetzung wurde überschüssiges Propylenoxid abdestilliert.

Die so erhaltene Polyoldispersion mit PO-funktionalisierten Kohlenstoffnanoröhren wurde direkt vor der Umsetzung mit dem Isocyanat nochmals im Rotor-/Stator-System (UltraTURRAX) geschert und mit Ultraschall (Probe Sonicator HD 3200, BANDELIN electronic GmbH & Co. KG, Berlin, Deutschland) behandelt, um eine möglichst hohe Dispergiergüte sicherzustellen.

Diese Feindispersion wurde sowohl vor als auch nach der Zugabe des Katalysators kurz bei vermindertem Druck entgast. Das Isocyanat wurde mit der Dispersion kurz verrührt. Dieses Reaktionsgemisch wurde in eine Metall-Klapp-Form gegossen und bei 70 °C getempert.

Die so erhaltenen Kohlenstoffnanoröhren-haltigen Polyurethan-Elastomere wurden hinsichtlich ihrer Härte und Zugfestigkeit untersucht.

### Beispiel 1: (Vordispergierung, 1 Gewichts-%, Dispersion 1)

In einem 150 mL Becherglas wurde 1 g der oxidierten CNTs vorgelegt und mit 99 g Desmophen® VP.PU 22HS51 versetzt. Dieses Gemisch wurde unter Eiswasser-Kühlung für 2 Minuten bei 24000 U/min mit einem Rotor-/Stator-System (T 18 basic ULTRA-TURRAX®, IKA Werke GmbH & Co. KG, Staufen, Deutschland) geschert.

### Beispiel 2: (Vordispergierung, 3 Gewichts-%, Dispersion 2)

In einem 150 mL Becherglas wurden 3 g der oxidierten CNTs vorgelegt und mit 97 g Desmophen® VP.PU 22HS51 versetzt. Dieses Gemisch wurde unter Eiswasser-Kühlung für 2 Minuten bei 24000 U/min mit einem Rotor-/Stator-System (T 18 basic ULTRA-TURRAX®, IKA Werke GmbH & Co. KG, Staufen, Deutschland) geschert.

### Beispiel 3: (Funktionalisierung, Dispersion 3)

In einem 500 mL Glasdruckreaktor wurden 227 g einer 1 Gewichts-%-Dispersion der oxidierten CNTs in Desmophen® VP.PU 22HS51 (Dispersion 1) mit 0,227 g Bis(2-dimethylaminoethyl)ether unter Schutzgas (Stickstoff) vorgelegt und dann auf 125 °C aufgeheizt. Anschließend wurden 10 g Propylenoxid zudosiert, wobei der Reaktordruck auf 3,0 bar (absolut) anstieg. Nach 5 h Reaktion unter Rühren bei 125 °C wurden leichtflüchtige Anteile bei 90 °C (1 mbar) abdestilliert und das Reaktionsgemisch anschließend auf Raumtemperatur abgekühlt. Zu Beginn der Reaktion betrug die Säurezahl des Reaktionsgemischs 0,55 mg KOH/g, am Ende der Reaktion 0,08 mg KOH/g.

### Beispiel 4: (Funktionalisierung, Dispersion 4)

In einem 500 mL Glasdruckreaktor wurden 227 g einer 3 Gewichts-%-Dispersion der oxidierten CNTs in Desmophen® VP.PU 22HS51 (Dispersion 2) mit 0,227 g Bis(2-dimethylaminoethyl)ether unter Schutzgas (Stickstoff) vorgelegt und dann auf 125 °C aufgeheizt. Anschließend wurden 10 g Propylenoxid zudosiert, wobei der Reaktordruck auf 3,0 bar (absolut) anstieg. Nach 5 h Reaktion unter Rühren bei 125 °C wurden leichtflüchtige Anteile bei 90 °C (1 mbar) abdestilliert und das Reaktionsgemisch anschließend auf Raumtemperatur abgekühlt. Zu Beginn der Reaktion betrug die Säurezahl des Reaktionsgemischs 0,86 mg KOH/g, am Ende der Reaktion 0,04 mg KOH/g.

### Beispiel 5: (Feindispergierung, 1 Gewichts-%, Dispersion 3A)

In einem 150 mL Becherglas wurden 90 g der Dispersion 3 vorgelegt. Dieses Gemisch wurde unter Eiswasser-Kühlung für 2 Minuten bei 24000 U/min mit einem Rotor-/Stator-System (T 18 basic ULTRA-TURRAX®, IKA Werke GmbH & Co. KG, Staufen, Deutschland) geschert und anschließend ebenfalls unter Eiswasserkühlung mit Ultraschall (Probe Sonicator HD 3200, BANDELIN electronic GmbH & Co. KG, Berlin, Deutschland) bis zu einem Gesamtenergieeintrag von 75 kJ behandelt. Die so erhaltene Dispersion 3A wurde unmittelbar für die weitere Umsetzung mit einem Isocyanat eingesetzt.

### Beispiel 6: (Feindispergierung, 3 Gewichts-%, Dispersion 4A)

In einem 150 mL Becherglas wurden 90 g der Dispersion 4 vorgelegt. Dieses Gemisch wurde unter Eiswasser-Kühlung für 2 Minuten bei 24000 U/min mit einem Rotor-/Stator-System (T 18 basic ULTRA-TURRAX®, IKA Werke GmbH & Co. KG, Staufen, Deutschland) geschert und anschließend ebenfalls unter Eiswasserkühlung mit Ultraschall (Probe Sonicator HD 3200, BANDELIN electronic GmbH & Co. KG, Berlin, Deutschland) bis zu einem Gesamtenergieeintrag von 75 kJ behandelt. Die so erhaltene Dispersion 4A wurde unmittelbar für die weitere Umsetzung mit einem Isocyanat eingesetzt.

### Beispiel 7: Herstellung der PUR-Elastomere

Die Polyole (mit und ohne Baytubes C150P) beziehungsweise die oxidierten CNTs umfassenden Polyol-Dispersionen (3A oder 4A) wurden in einem 1L-Planschlifftopf vorgelegt und sowohl vor als auch nach der Katalysator-Zugabe kurz entgast. Das Isocyanat wurde bei Raumtemperatur kurz untergerührt, das Reaktionsgemisch in eine Metallklappform ausgegossen und anschließend einem Temperzyklus unterworfen.

Die Ansätze PUR1 bis PUR6 sind in der nachfolgenden Tabelle im Einzelnen wiedergegeben.

| Substanz | PUR1 | PUR2 | PUR3 | PUR4 | PUR5 | PUR6 |
|---|---|---|---|---|---|---|
| Desmophen® VP.PU 22HS51 | 99,26 | 99,26 | - | 96,30 | 96,30 | - |
| Dispersion 3A | - | - | 100,26 | - | - | - |
| Dispersion 4A | - | - | - | - | - | 99,30 |
| DPG | 0,14 | 0,14 | - | 0,45 | 0,45 | - |
| DBTL | 0,02 | 0,02 | 0,02 | 0,02 | 0,02 | 0,02 |
| Dabco 33-LV | 0,50 | 0,50 | 0,50 | 0,50 | 0,50 | 0,50 |
| Niax A1 | 0,10 | 0,10 | - | 0,10 | 0,10 | - |
| Desmodur® CD-S | 30,73 | 30,73 | 30,66 | 30,55 | 30,55 | 30,37 |
| Baytubes® C150P | - | 1,00 | - | - | 2,98 | - |
| Index | 105,0 | 105,0 | 105,0 | 105,0 | 105,0 | 105,0 |

Die mechanischen Eigenschaften der erhaltenen Elastomere PUR1 bis PUR6 sind in den nachfolgenden beiden Tabellen aufgeführt.

| | PUR1 | PUR2 | PUR3 |
|---|---|---|---|
| Nanoröhren-Typ | - | Baytubes® C150P | erfindungsgemäß |
| c(Nanoröhre) [Gewichts-%] | - | 0,76 | 0,76 |
| Härte [Shore A] | 51 | 51 | 56 |
| Zugfestigkeit [MPa] | 2,0 ± 0,3 | 2,0 ± 0,4 | 2,4 ± 0,3 |
| Maximale Dehnung [%] | 334,7 ± 42,3 | 347,8 ± 56,7 | 312,1 ± 30,9 |
| E-Modul [N/mm²] | 1,9 ± 0,1 | 1,8 ± 0,1 | 2,0 ± 0,1 |

| | PUR4 | PUR5 | PUR6 |
|---|---|---|---|
| Nanoröhren-Typ | - | Baytubes® C150P | erfindungsgemäß |
| c(Nanoröhre) [Gewichts-%] | - | 2,28 | 2,28 |
| Härte [Shore A] | 54 | 60 | 64 |
| Zugfestigkeit [MPa] | 2,1 ± 0,2 | 2,6 ± 0,1 | 3,9 ± 0,4 |
| Maximale Dehnung [%] | 339,0 ± 28,6 | 243,0 ± 1,7 | 227,3 ± 24,4 |
| E-Modul [N/mm²] | 1,9 ± 0,0 | 2,8 ± 0,2 | 3,7 ± 0,1 |

Zur besseren Vergleichbarkeit zeigt die folgende Tabelle die prozentualen Veränderung der bestimmten Materialkennwerte für die mit Kohlenstoffnanoröhren gefüllten Elastomere im Vergleich zu dem korrespondierenden ungefüllten Elastomer PUR1 beziehungsweise PUR4.

| | PUR2 | PUR3 | PUR5 | PUR6 |
|---|---|---|---|---|
| Härte | 0% | 10% | 11% | 19% |
| Zugfestigkeit | 1,1% | 19,5% | 21,7% | 82,9% |
| Maximale Dehnung | 3,9% | -6,7% | 8,6% | -33,0% |
| E-Modul | -3,1% | 5,9% | -2,6% | 93,2% |

Man erkennt hier den verstärkenden Einfluss der erfindungsgemäß funktionalisierten Kohlenstoffnanoröhren auf das Polyurethan-Elastomer. Gegenüber dem ungefüllten Elastomer PUR1 wies das mit erfindungsgemäßen Kohlenstoffnanoröhren ausgerüstete Elastomer PUR3 eine um 10% größere Shore A-Härte, eine um 19,5% höhere Zugfestigkeit, eine um 6,7% verringerte maximale Dehnung und ein um 5,9% höheres Elastizitätsmodul auf. Das Elastomer PUR2 mit den in keiner Weise funktionalisierten Kohlenstoffnanoröhren vom Typ Baytubes® C150P wies gegenüber dem ungefüllten Elastomer PUR1 nur keine Erhöhung der Shore-Härte, eine marginale Erhöhung der Zugfestigkeit, sogar eine Erhöhung der maximalen Dehnung und eine Erniedrigung des Elastizitätsmoduls auf.

In gleicher Weise wies das mit den erfindungsgemäßen Kohlenstoffnanoröhren ausgerüstete Elastomer PUR6 gegenüber dem korrespondierenden ungefüllten Elastomer PUR4 eine um 19% größere Shore A-Härte, eine um 82,9% höhere Zugfestigkeit, eine um 33% geringere maximale Dehnung und ein im 93,2% höheres Elastizitätsmodul auf. Das Elastomer PUR5 mit den in keiner Weise funktionalisierten Kohlenstoffnanoröhren vom Typ Baytubes® C150P wies gegenüber dem ungefüllten Elastomer PUR4 nur eine geringere Erhöhung der Shore-Härte und der Zugfestigkeit, sogar eine Erhöhung der maximalen Dehnung und eine Erniedrigung des Elastizitätsmoduls auf.

## Patentansprüche

1. Hydroxygruppen umfassende Kohlenstoffnanoröhre, **dadurch gekennzeichnet, dass** ihre Oberfläche kovalent hieran gebundene Hydroxyalkylestergruppen umfasst, die ausgewählt sind aus der Gruppe gemäß der allgemeinen Formel (1) und/oder der allgemeinen Formel (2), wobei (CNT) für die Oberfläche der Kohlenstoffnanoröhre steht und R1 und R2 unabhängig voneinander Wasserstoff, ein Alkylrest oder ein Arylrest sind:

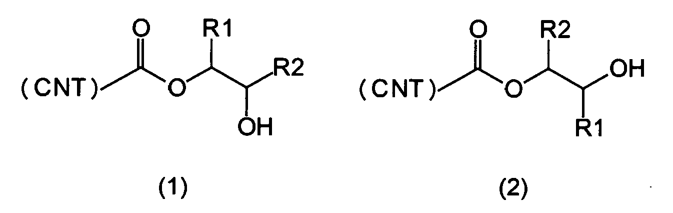

2. Hydroxygruppen umfassende Kohlenstoffnanoröhre gemäß Anspruch 1, wobei R1 und R2 unabhängig voneinander für Wasserstoff, Methyl, Ethyl, n-Propyl, iso-Propyl, n-Butyl, sec-Butyl, iso-Butyl, tert-Butyl und/oder Phenyl stehen oder gemeinsam für -(CH₂)₄- stehen.

3. Hydroxygruppen umfassende Kohlenstoffnanoröhre gemäß Anspruch 1, wobei die Kohlenstoffnanoröhre ausgewählt ist aus der Gruppe umfassend einwandige Kohlenstoffnanoröhren, mehrwandige Kohlenstoffnanoröhren, mehrwandige Kohlenstoffnanoröhren vom Zylinder-Typ, vom Scroll-Typ, vom Multiscroll-Typ und/oder mit zwiebelartiger Struktur.

4. Verfahren zur Herstellung von Hydroxygruppen umfassenden Kohlenstoffnanoröhren gemäß Anspruch 1, umfassend die Schritte:
(a) Bereitstellen von Kohlenstoffnanoröhren, deren Oberfläche kovalent hieran gebundene Carboxylgruppen umfasst; und
(b) Reaktion der Kohlenstoffnanoröhren aus Schritt (a) mit einem Epoxid 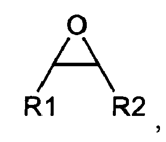
wobei R1 und R2 unabhängig voneinander Wasserstoff, ein Alkylrest oder ein Arylrest sind.

5. Verfahren gemäß Anspruch 4, wobei die Reaktion der Kohlenstoffnanoröhren in Schritt (b) in Gegenwart eines tertiären Amins als Katalysator durchgeführt wird.

6. Verfahren gemäß Anspruch 4, wobei in dem Epoxid in Schritt (b) R1 und R2 unabhängig voneinander für Wasserstoff, Methyl, Ethyl, n-Propyl, iso-Propyl, n-Butyl, sec-Butyl, iso-Butyl, tert-Butyl und/oder Phenyl stehen oder gemeinsam für -(CH₂)₄- stehen.

7. Verfahren gemäß Anspruch 4, wobei die Kohlenstoffnanoröhren in Schritt (a) ausgewählt sind aus der Gruppe umfassend einwandige Kohlenstoffnanoröhren, mehrwandige Kohlenstoffnanoröhren, mehrwandige Kohlenstoffnanoröhren vom Zylinder-Typ, vom Scroll-Typ, vom Multiscroll-Typ und/oder mit zwiebelartiger Struktur.

8. Verfahren gemäß Anspruch 4, wobei die Reaktion in Schritt (b) bei einer Temperatur von ≥ 100 °C bis ≤ 150 °C durchgeführt wird.

9. Verfahren zur Herstellung von Kohlenstoffnanoröhren umfassenden Polyurethanpolymeren, umfassend die Schritte:
(a) Bereitstellen einer Dispersion von Kohlenstoffnanoröhren, deren Oberfläche kovalent hieran gebundene Carboxylgruppen umfasst, in einem Polyol;
(b) Reaktion der Dispersion aus Schritt (a) mit einem Epoxid 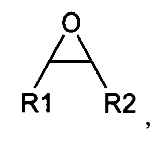 wobei R1 und R2 unabhängig voneinander Wasserstoff, ein Alkylrest oder ein Arylrest sind; und
(c) Reaktion der in Schritt (b) erhaltenen Dispersion mit einem Polyisocyanat.

10. Verfahren gemäß Anspruch 9, wobei die Reaktion der Dispersion mit einem Alkylenoxid in Schritt (b) in Gegenwart eines tertiären Amins als Katalysator durchgeführt wird.

11. Verfahren gemäß Anspruch 9, wobei der Polyol in Schritt (a) ein Polyetherpolyol und/oder ein Polyesterpolyol ist.

12. Verfahren gemäß Anspruch 9, wobei in dem Epoxid in Schritt (b) R1 und R2 unabhängig voneinander für Wasserstoff, Methyl, Ethyl, n-Propyl, iso-Propyl, n-Butyl, sec-Butyl, iso-Butyl, tert-Butyl und/oder Phenyl stehen oder gemeinsam für -(CH₂)₄- stehen.

13. Verfahren gemäß Anspruch 9, wobei das Polyisocyanat in Schritt (c) ein Polyisocyanat auf der Basis von Diphenyl-4,4'-diisocyanat ist.

14. Kohlenstoffnanoröhren umfassendes Polyurethanpolymer, wobei zumindest ein Teil der Kohlenstoffnanoröhren kovalent an das Polyurethanpolymer gebunden ist, **dadurch gekennzeichnet, dass** zwischen den Kohlenstoffnanoröhren und dem Polyurethanpolymer Urethanbindungen aus kovalent an die Oberfläche der Kohlenstoffnanoröhren gebundenen Hydroxyalkylestergruppen und freien Isocyanatgruppen des Polyurethanpolymers vorliegen, wobei die Urethanbindungen ausgewählt sind aus der Gruppe gemäß den allgemeinen Formeln (3) und/oder (4): 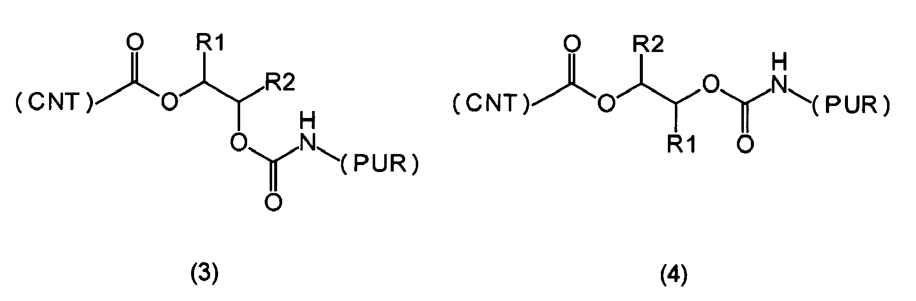 und wobei (CNT) für die Oberfläche der Kohlenstoffnanoröhre steht, (PUR) für ein Polyurethanpolymer steht und R1 und R2 unabhängig voneinander Wasserstoff, ein Alkylrest oder ein Arylrest sind.

15. Verwendung von Hydroxygruppen umfassenden Kohlenstoffnanoröhren gemäß Anspruch 1 zur Herstellung von Kohlenstoffnanoröhren umfassenden Polymeren.
